# EUROPÄISCHE PATENTANMELDUNG

(11) **EP 2 752 911 A1**
(43) Veröffentlichungstag der Anmeldung: **09.07.2014**
(21) Anmeldenummer: 13150509.1
(22) Anmeldetag: 08.01.2013
(51) Int. Cl.: H01M 2/02, H01M 2/20, H01M 2/22, H01M 10/30, H01M 10/39

(54) **Elektrochemische Speichereinrichtung mit verbesserten elektrischen Leitungseigenschaften**

(71) Anmelder: Siemens Aktiengesellschaft, 80333 München (DE)
(72) Erfinder: Kühne, Michael, 90762 Fürth (DE)

(57) **Zusammenfassung**

Die Erfindung betrifft elektrochemische Speichereinrichtung (100), welche einen bei Betrieb mit einem Anodenmaterial (10) befüllten Anodenraum (11) aufweist, sowie mit einem Kathodenmaterial (20) befüllten Kathodenraum (21), wobei der Anodenraum (11) von dem Kathodenraum (21) durch einen Ionen leitenden Festkörperelektrolyten (30) getrennt ist, und wobei der Anodenraum (11) zu einer Seite wenigstens teilweise durch den Festkörperelektrolyten (30) begrenzt ist, und zu einer anderen Seite wenigstens teilweise von einer den Festkörperelektrolyten (30) wenigstens teilweise umgebenden Wandung (40), welche von einem Kopfteil (110) der elektrochemischen Speichereinrichtung (100), einem dem Kopfteil (110) gegenüber angeordneten Fußteil (120) und/oder von einem zwischen Kopfteil (110) und Fußteil (120) angeordneten Seitenteil (130) umfasst ist, und wobei die Wandung (40) einen elektrisch leitenden Wandungsabschnitt (45) aufweist, der als Anode (12) dem Anodenraum (11) zugeordnet ist, wobei ein wenigstens teilweise flächiger, elektrisch leitender Leitungsabschnitt (50) umfasst ist, der mit dem Wandungsabschnitt (45) über eine Fläche (55) elektrisch verbunden ist, und wobei die Leitfähigkeit pro Fläche (55) des Leitungsabschnitts (50) größer ist als die der Wandung (40) pro Fläche des Wandungsabschnitts (45).

## Beschreibung

Die vorliegende Erfindung betrifft eine elektrochemische Speichereinrichtung, welche einen mit einem Anodenmaterial befüllten Anodenraum aufweist, sowie mit einem Kathodenmaterial befüllten Kathodenraum, wobei der Anodenraum von dem Kathodenraum durch einen Ionen leitenden Festkörperelektrolyten getrennt ist, und wobei der Anodenraum zu einer Seite wenigstens teilweise durch den Festkörperelektrolyten begrenzt ist, und zu einer anderen Seite wenigstens teilweise von einer den Festkörperelektrolyten wenigstens teilweise umgebenden Wandung, welche von einem Kopfteil der elektrochemischen Speichereinrichtung, einem dem Kopfteil gegenüber angeordneten Fußteil und/oder von einem zwischen Kopfteil und Fußteil angeordneten Seitenteil umfasst ist, und wobei die Wandung einen elektrisch leitenden Wandungsabschnitt aufweist, der als Anode dem Anodenraum zugeordnet ist. Ebenso betrifft die Erfindung ein thermisches Modul zur Speicherung und Abgabe von elektrischer Energie umfassend eine Mehrzahl an derartigen elektrisch verschalteten elektrochemischen Speichereinrichtungen.

Die Bezeichnung der betreffenden Elektroden mit Anode und Kathode soll vorliegend der Konvention folgen, dass diejenige Elektrode mit Anode bezeichnet wird, die bei Entladung der elektrochemischen Speichereinrichtung eine Oxidation des Anodenmaterials vermittelt. Die jeweils andere Elektrode soll mit Kathode bezeichnet werden. Hierbei ist es dem Fachmann verständlich, dass die Funktion der Elektroden sich bei Aufladung der elektrochemischen Speichereinrichtung entsprechend vertauscht.

Die vorliegend beschriebene und beanspruchte elektrochemische Speichereinrichtung ist als Hochtemperatur-Speichereinrichtung ausgebildet, welche eine Mindesttemperatur von wenigstens 100 °C als Betriebstemperatur erfordert. Insbesondere beträgt die Betriebstemperatur zwischen 200 °C und 350 °C. Bei diesen Temperaturbedingungen ist die Betriebstemperatur ausreichend hoch, so dass der Festkörperelektrolyt gut Ionen leitend wirkt. Die gute Ionenleitung leistet in Folge einen nur geringen Beitrag zum Innenwiderstand der elektrochemischen Speichereinrichtung.

Es ist aber auch möglich, eine Betriebstemperatur von bis zu 500 °C vorzusehen. Typische von der Erfindung betroffene elektrochemische Speichereinrichtungen sind diejenigen, die auf der Technologie von Natrium-Nickel-Chlorid-Zellen (Na-NiCl₂-Zellen), bzw. Natrium-Eisen-Chlorid-Zellen (NaFeCl₂-Zellen) bzw. Mischformen dieser Zellen, bzw. von Natrium-Schwefel-Zellen (NaS-Zellen) beruhen.

Der Aufbau einer herkömmlichen elektrochemischen Speichereinrichtung, die auf der Technologie von Natrium-Nickel-Chlorid-Zellen basiert, weist etwa eine bei Entladebetrieb als Anode ausgebildete negative Elektrode auf, deren Anodenmaterial bei Betriebstemperatur flüssiges Natrium ist. Dieses füllt typischerweise einen Teil des Anodenraums aus. Die positive Elektrode bei Entladebetrieb, also die Kathode, weist einen Kathodenraum auf, der wenigstens teilweise von einem geeigneten Metall, etwa Nickel (Ni), in Mischung mit einem ebenfalls geeigneten Salz, etwa Natriumchlorid (NaCl), sowie weiterhin geeigneten Zusätzen, bspw. Aluminiumchlorid (AlCl₃), angefüllt ist. Das Gemisch liegt bei Betriebstemperatur der elektrochemischen Speichereinrichtung typischerweise wenigstens teilweise als flüssiger Elektrolyt vor.

An dieser Stelle sei auch darauf hingewiesen, dass die erfindungsgemäß beanspruchte elektrochemische Speichereinrichtung vorliegend derart beschrieben ist, wie sie während eines typischen Arbeitsbetriebszustandes vorliegt. Da elektrochemische Speichereinrichtungen mitunter vor Inbetriebnahme einer initialen elektrischen Aufladung unterworfen werden müssen, kann die Ausgestaltung der elektrochemischen Speichereinrichtung vor Inbetriebnahme mitunter eine abweichend von der vorliegenden Beschreibung sein. Insbesondere ist vor der initialen Aufladung der Anodenraum etwa noch nicht mit einem Anodenmaterial befüllt.

Anodenraum und Kathodenraum sind voneinander durch einen Festkörperelektrolyten getrennt, der als keramischer Separator lediglich für Ionen durchlässig ist. Einen anderen Stoffaustausch als den von Ionen soll der Festkörperelektrolyt nicht zulassen. Typische Festkörperelektrolyten, die in Natrium-Nickel-Chlorid-Zellen eingesetzt werden, umfassen β-Al₂O₃ bzw. β"-Al₂O₃ als keramisches Material. Dieses erlaubt eine spezifische Ionenleitfähigkeit für Na⁺-Ionen einzustellen, die zwischen Anodenraum und Kathodenraum je nach Potentialgefälle durch den Festkörperelektrolyten transportiert werden. Die beim Ladebetrieb bzw. Entladebetrieb maßgeblichen Reaktionen ergeben sich aus der nachfolgenden Reaktionsgleichung (Entladebetrieb, von links nach rechts; Ladebetrieb, von rechts nach links):

2Na + NiCl₂ ↔ 2NaCl + Ni

Im Gleichgewichtszustand kann sich so eine Spannung von etwa 2,58 Volt zwischen Anode und Kathode aufbauen.

Für praktische Anwendungen werden derartige elektrochemische Speichereinrichtungen zu thermischen Modulen verschaltet, wobei typischerweise im Bereich des Kopfteiles metallisch leitfähige Kontaktierungsvorrichtungen zum Stromabgriff angebracht werden. Die Ladungsträger werden hierbei im Umfeld dieser Kontaktierungsvorrichtungen gesammelt, wobei jedoch eine mitunter hohe lokale Stromdichte an diesen Kontaktierungsvorrichtungen auftreten kann. Insbesondere bei Hochleistungsspeichereinrichtungen kann es aufgrund der ohmschen Verluste in diesen Bereichen zu einer verhältnismäßig starken Wärmeproduktion kommen. Dies gefährdet jedoch den zuverlässigen Betrieb solcher thermischer Module und bewirkt zudem eine Verminderung des elektrischen Gesamtwirkungsgrads einzelner elektrochemischer Speichereinrichtungen bis zu etlichen Prozentpunkten im Vergleich zum regulären Betrieb.

Derartige ohmsche Verluste werden bei Speichereinrichtungen in Kauf genommen, die nicht für Hochleistungsanwendungsfälle konzipiert sind, wobei die Verluste verhältnismäßig gering ausfallen. Werden jedoch die elektrochemischen Speichereinrichtungen bei Beaufschlagung mit sehr hohen lokalen Stromdichten im Grenzbereich ihrer Auslegung betrieben, können auch Verlustleistungen von einigen Watt auftreten. Insbesondere bei auf der Technologie von Natrium-Nickel-Chlorid-Zellen basierenden elektrochemischen Speichereinrichtungen, deren Wandung mitunter aus verhältnismäßig dünnem Blech gefertigt ist, kann so ein Spannungsabfall von bis zu über 50 mV verursacht werden, was bspw. bei 100 A einer lokalen Wärmequelle von etwa 5 Watt Leistung je Speichereinrichtung entspricht.

Aufgabe der vorliegenden Erfindung ist es folglich, eine elektrochemische Speichereinrichtung vorzuschlagen, die die aus dem Stand der Technik bekannten Nachteile vermeidet. Insbesondere soll die erfindungsgemäß vorgeschlagene elektrochemische Speichereinrichtung einen Betrieb auch bei hohen Stromdichten ermöglichen, wobei jedoch die ohmsche Verlustleistung im Vergleich zu herkömmlichen Speichereinrichtungen verringert sein soll. Insbesondere soll durch eine einfache und kostengünstige bauliche Veränderung an bereits aus dem Stand der Technik bekannten elektrochemischen Speichereinrichtungen eine hinsichtlich der Wärmeverlustleistung verbesserte Speichereinrichtung vorgeschlagen werden. Das verbesserte Stromleitungsverhalten soll insbesondere das Leitungsverhalten der Anode betreffen.

Erfindungsgemäß werden diese der Erfindung zugrunde liegenden Aufgaben durch eine elektrochemische Speichereinrichtung gemäß Anspruch 1 sowie durch ein thermisches Modul gemäß Anspruch 11 gelöst.

Insbesondere werden die der Erfindung zugrunde liegenden Aufgaben durch eine elektrochemische Speichereinrichtung gelöst, welche einen mit einem Anodenmaterial befüllten Anodenraum aufweist, sowie mit einem Kathodenmaterial befüllten Kathodenraum, wobei der Anodenraum von dem Kathodenraum durch einen Ionen leitenden Festkörperelektrolyten getrennt ist und wobei der Anodenraum zu einer Seite wenigstens teilweise durch den Festkörperelektrolyten begrenzt ist und zu einer anderen Seite wenigstens teilweise von einer den Festkörperelektrolyten wenigstens teilweise umgebenden Wandung, welche von einem Kopfteil der elektrochemischen Speichereinrichtung, einem dem Kopfteil gegenüber angeordneten Fußteil und/oder von einem zwischen Kopfteil und Fußteil angeordneten Seitenteil umfasst ist, und wobei die Wandung einen elektrisch leitenden Wandungsabschnitt aufweist, der als Anode dem Anodenraum zugeordnet ist, wobei ein wenigstens teilweise flächiger, elektrisch leitender Leitungsabschnitt umfasst ist, der mit dem Wandungsabschnitt über eine Fläche elektrisch verbunden ist, und wobei die Leitfähigkeit pro Fläche des Leitungsabschnitts größer ist als die der Wandung pro Fläche des Wandungsabschnitts.

Weiterhin sind die der Erfindung zugrunde liegenden Aufgaben durch ein thermisches Modul zur Speicherung und Abgabe von elektrischer Energie gelöst, umfassend eine Mehrzahl an elektrisch verschalteten elektrochemischen Speichereinrichtungen gemäß der vorab oder nachfolgend beschriebenen Ausführungsformen, wobei der wenigstens teilweise flächige Leitungsabschnitt elektrisch zur Zu- und Abführung von elektrischer Ladung an die Anode mit geeigneten elektrischen Leitungen kontaktiert ist.

Gemäß einer typischen und vorteilhaften Ausführungsform der elektrochemischen Speichereinrichtung, basiert diese auf der Technologie von Natrium-Nickel-Chlorid-Zellen bzw. von Natrium-Eisen-Chlorid-Zellen, bzw. von Mischformen davon. Hierbei weist das Anodenmaterial Natrium auf bzw. ist Natrium, welches unter Betriebstemperatur in flüssiger Form vorliegt. Das Kathodenmaterial ist typischerweise eine Mischung eines Metalls (etwa Ni) mit wenigstens einem Salz (etwa NaCl) und möglicherweise wenigstens einem weiteren Zusatzstoff (z.B. AlCl₃ bzw. NaAlCl₄). Die Mischung liegt bei Betriebstemperatur wenigstens teilweise als flüssige Elektrolytschmelze vor, die den Festkörperelektrolyten benetzt.

Der Festkörperelektrolyt erlaubt erfindungsgemäß den Austausch von Ionen zwischen Anodenraum und Kathodenraum. Davon ist jedoch kein direkter Stoffaustausch mit umfasst, der als Fluidaustausch bzw. Festkörperaustausch verstanden werden kann. Weiterhin ist der Festkörperelektrolyt bevorzugt selektiv für die Leitung bestimmter Ionen des Anodenmaterials ausgebildet. Gemäß der Technologie der Natrium-Nickel-Chlorid-Zellen ist der Festkörperelektrolyt etwa selektiv für Na⁺-Ionen leitfähig. Alternativ oder auch zusätzlich kann eine Leitfähigkeit für Li⁺- bzw. K⁺-Ionen möglich sein.

Das Kopfteil der elektrochemischen Speichereinrichtung kann neben einem Abschluss der Speichereinrichtung auch der elektrischen Kontaktierung derselben mit elektrischen Leitungen dienen. Das Fußteil dient hierbei typischerweise bei betriebsgemäßer Orientierung der Speichereinrichtung zur Abstützung der Speichereinrichtung gegen eine nicht weiter bezeichnete Oberfläche.

An dieser Stelle soll darauf hingewiesen werden, dass für den Fall, dass eine beschriebene technische Wirkungsweise einzelner technischer Merkmale von der Orientierung der elektrochemischen Speichereinrichtung im Raum abhängig sein sollte, davon ausgegangen werden soll, dass die Orientierung relativ zu dem Gravitationsfeld der Erde bei Betrieb der Speichereinrichtung zu bestimmen ist. Demgemäß ist das Fußteil der elektrochemischen Speichereinrichtung dem Erdkern näher zugeordnet als das Kopfteil. Die Orientierung ist zudem typischerweise derart, dass die Verbindung zwischen Kopfteil und Fußteil im Wesentlichen parallel zum Verlauf des Gravitationsfeldes der Erde angeordnet ist.

Die Erfindungsidee basiert darauf, dass der elektrisch leitende Wandungsabschnitt, welcher als Anode dem Anodenraum zugeordnet ist, zumindest teilweise mit einem teilweise flächigen elektrisch leitenden Leitungsabschnitt versehen ist. Wandungsabschnitt und Leitungsabschnitt sind hierbei elektrisch verbunden, so dass ein Ladungsaustausch zwischen Wandungsabschnitt und Leitungsabschnitt erfolgen kann.

Weiterhin sieht die Erfindung vor, dass die Leitfähigkeit pro Fläche des Leitungsabschnittes größer ist als die der Wandung pro Fläche des Wandungsabschnittes. Folglich weist der Leitungsabschnitt eine höhere Flächenleitfähigkeit auf, als der jeweils damit elektrisch kontaktierte Wandungsabschnitt. Wird nun über den Leitungsabschnitt elektrische Ladung der elektrochemischen Speichereinrichtung zu- oder abgeführt, wird so die thermische Verlustleistung aufgrund von ohmschen Verlusten verringert im Vergleich zu einer elektrochemischen Speichereinrichtung, welche nicht mit einem erfindungsgemäßen Leitungsabschnitt versehen ist.

Die Leitfähigkeit bezieht sich vorliegend auf die bei den typischen Betriebsbedingungen auftretenden elektrischen Ströme der elektrochemischen Speichereinrichtungen. Insbesondere ist dies ein elektrischer Gleichstrom.

Neben der Funktion des wenigstens teilweise flächigen Leitungsabschnittes als Bauelement zur Verringerung der elektrischen Widerstandsverlustleistung vermag der Leitungsabschnitt zudem eine Stützfunktion für die elektrochemische Speichereinrichtung aufzuweisen. Da bei herkömmlichen elektrochemischen Speichereinrichtungen insbesondere vom Seitenteil umfasste Wandungen aus Materialkostengründen sowie aus Gewichtsgründen durch verhältnismäßig dünne flächige Bauteile ausgeführt sind, weisen diese mitunter keine hohe Belastbarkeit gegenüber mechanischen Einflüssen auf. Aus diesem Grund kommt es insbesondere beim Verbauen und Warten solcher elektrochemischer Speichereinrichtungen in thermischen Modulen immer wieder zu Beschädigungen, die die Funktionsfähigkeit solcher Speichereinrichtungen einschränkt. Dies wiederum hat eine ungewünschte Auswirkung auf den elektrischen Wirkungsgrad solcher Speichereinrichtungen wie auch auf die erforderliche Wartungshäufigkeit der diese umfassenden thermischen Module.

Aufgrund der erfindungsgemäß verminderten thermischen Verlustleistung durch ohmsche Verluste, kann die elektrochemische Speichereinrichtung auch mit verhältnismäßig höheren Stromdichten beim Entlade- und Ladebetrieb betrieben werden, so dass auch ein Betrieb als Hochleistungszelle möglich ist. Derartige Hochleistungszellen sind insbesondere in Verbindung mit der Energiespeicherung von Kraftwerksleistungen zur zeitlichen Zwischenspeicherung und nachfolgenden Wiederabgabe in die öffentlichen Stromversorgungsnetzwerke erforderlich.

Gemäß einer besonders vorteilhaften Ausführungsform der Erfindung ist vorgesehen, dass die Fläche des Leitungsabschnitts dem Flächenverlauf des Wandungsabschnitts angepasst ist. Hierbei ist es nicht erforderlich, dass eine passgenaue Anpassung erfolgt, bzw. dass die Anpassung vollflächig erfolgt. Die Anpassung der Fläche des Leitungsabschnittes an den Flächenverlauf des Wandungsabschnittes soll lediglich gewährleisten, dass beide in geeigneter Weise miteinander ausreichend elektrisch kontaktiert werden können. Hierzu sollen beide insoweit in flächigen Kontakt gebracht werden, dass beide auch vorteilhaft elektrisch kontaktiert sind. Bevorzugt ist hierbei, dass die Fläche des Leitungsabschnitts dem Flächenverlauf des Wandungsabschnittes im Wesentlichen folgt.

Ausführungsgemäß ist es auch besonders vorteilhaft, wenn der Wandungsabschnitt in einem Bereich angeordnet ist, welcher einen Teil des Anodenraums begrenzt, der bei einem Ladezustand von etwa wenigstens 50 % bereits mit Anodenmaterial angefüllt ist, da so elektrische Ladung mittels direkter elektrischer Leitung durch das Anodenmaterial und durch die Wandung hindurch an den wenigstens teilweise flächigen Leitungsabschnitt abgeleitet werden kann. Bei einer solchen Anordnung treten verhältnismäßig geringere ohmsche Verluste auf, als, wenn bspw. der Anodenraum noch nicht ausreichend mit Anodenmaterial angefüllt ist, um eine direkte elektrische Leitung zu ermöglichen.

Bevorzugt sind der Wandungsabschnitt und/oder der Leitungsabschnitt, metallisch. Weiterhin bevorzugt sind beide Abschnitte als Bleche ausgeführt.

Entsprechend einer weiteren bevorzugten Ausführungsform der Erfindung ist vorgesehen, dass der Wandungsabschnitt eine Wandungsdicke aufweist, die geringer ist als die Dicke des wenigstens teilweise flächigen Leitungsabschnitts im Bereich der bezeichneten Fläche. Aufgrund der größeren Dicke des Leitungsabschnitts weist dieser erneut im Bereich der bezeichneten Fläche, die mit dem Wandungsabschnitt elektrisch verbunden ist, eine erhöhte elektrische Leitfähigkeit pro Fläche auf und eignet sich insbesondere dann bei Kontaktierung mit einem Stromabgriff zur Verringerung des Gesamtwiderstandes bei Zu- und Abfuhr von elektrischer Ladung.

Gemäß einer weiteren vorteilhaften Ausführungsform der Erfindung ist vorgesehen, dass der Wandungsabschnitt sowie der wenigstens teilweise flächige Leitungsabschnitt metallisch sind, wobei beide über eine feste metallische Verbindung, insbesondere eine Schweißverbindung, miteinander mechanisch belastbar verbunden sind. Die ausführungsgemäße metallische Verbindung erfordert hierbei nicht unbedingt das Vorsehen eines Drittmetalls. Es ist bereits ausreichend, dass beide metallischen Abschnitte etwa über eine mechanisch belastbare Klemmverbindung miteinander elektrisch verbunden sind. Schweißverbindungen mit einem Drittmetall eigenen sich jedoch zur festen Verbindung beider Leitungsabschnitte besonders. Zudem weisen solche Verbindungen eine geeignete mechanische Festigkeit auf, um etwa den Wandungsabschnitt im Bereich der Verschweißung noch zusätzlich mechanisch zu verstärken. Alternativ zu einer Schweißverbindung können auch noch andere Verbindungsarten verwirklicht sein, so etwa eine Steckverbindung, eine Klemmverbindung, eine Lötverbindung usw..

Bevorzugt weisen der Wandungsabschnitt sowie der teilweise flächige Leitungsabschnitt auch im Wesentlichen gleich große Wärmeausdehnungskoeffizienten auf, so dass bei Veränderung der Betriebstemperatur thermische Spannungen zwischen beiden verhältnismäßig gering ausfallen. Insbesondere soll kein Bimetall durch die Verbindung von Wandungsabschnitt und Leitungsabschnitt erzeugt werden.

Gemäß einer weiteren besonders bevorzugten Ausführungsform der Erfindung ist vorgesehen, dass der Wandungsabschnitt sowie der wenigstens teilweise flächige Leitungsabschnitt einstückig gefertigt sind. Insbesondere kann der Leitungsabschnitt lediglich als Verstärkung des Wandungsabschnitts ausgebildet sein. Ebenso kann der Leitungsabschnitt durch eine geeignete flächige Umformung, bspw. eine Biegung oder eine Mehrfachbiegung ausgebildet sein. Die einstückige Ausführung von Wandungsabschnitt und Leitungsabschnitt ergeben je nach konkreter Ausführungsform vorteilhafte elektrische Verbindungen von Wandungsabschnitt und Leitungsabschnitt bzw. sind kostengünstig in der Herstellung.

Entsprechend einer weiteren Ausführungsform der Erfindung ist vorgesehen, dass der Wandungsabschnitt näher in Bezug zum Kopfteil angeordnet ist als zum Fußteil. Insofern kann der Stromabgriff über den Leitungsabschnitt in der Nähe zum Kopfteil erfolgen. Dies ist insbesondere bei Verschaltung mehrerer elektrochemischer Speichereinrichtungen in einem thermischen Modul von Vorteil, da die elektrochemischen Speichereinrichtungen lediglich an einer Seite elektrisch verschaltet werden müssen.

Gemäß eines weiteren vorteilhaften Aspekts der Erfindung ist der Wandungsabschnitt am Seitenteil angeordnet. Das Seitenteil ist insbesondere bei Speichereinrichtungen, die auf der Technologie von Natrium-Nickel-Chlorid-Zellen basieren, leitfähig ausgebildet, um die Anode zu kontaktieren. In anderen Worten, entspricht bei Betrieb das Potenzial des Seitenteils im Wesentlichen dem Anodenpotenzial.

Entsprechend einer weiteren Ausführungsform der Erfindung ist vorgesehen, dass der wenigstens teilweise flächige Leitungsabschnitt das Kopfteil teilweise oder vollständig umgibt, insbesondere um das Kopfteil herum als Leitungsmanschette angeordnet ist. Ein Umgeben soll vorliegend insbesondere als eine Geometrie aufweisend verstanden werden, die dem Kopfteil wenigstens teilweise umfänglich folgt. Der Umfang kann hierbei insbesondere auch den Umfang des Seitenteils betreffen, welcher das Kopfteil umfänglich umschließt. Insofern kann der Leitungsabschnitt zwar mit dem Seitenteil verbunden und elektrisch kontaktiert sein, jedoch das Kopfteil umgeben. Ausführungsgemäß kann insbesondere im Bereich des Kopfteils so eine geeignete elektrische Kontaktierungsstelle wie auch eine mechanische Verstärkung erreicht werden. Durch das Vorsehen einer Leitungsmanschette kann zudem der Leitungsabschnitt auch geeignet ausgeformt sein, wodurch bspw. auch eine nachträgliche Ausrüstung einer bereits bestehenden elektrochemischen Speichereinrichtung mit einem flächigen Leitungsabschnitt ermöglicht wird. Die beschriebenen Ausführungsformen ermöglichen zudem die leichte Zugänglichkeit der Anode der elektrochemischen Speichereinrichtung.

Entsprechend einer weiteren vorteilhaften Ausführungsform ist der wenigstens teilweise flächige Leitungsabschnitt über das Kopfteil herausragend ausgebildet. Der Leitungsabschnitt ragt also im Sinne einer Lasche bzw. eines Kragens über das Kopfteil heraus. Dabei stellt das Kopfteil typischerweise zumindest im Bereich des Wandungsabschnitts eine geometrische Begrenzung der Speichereinrichtung dar. Durch die ausführungsgemäße Geometrie kann so wiederum die manuelle Erreichbarkeit der elektrischen Kontaktstellen begünstigt werden. Zudem ermöglicht der herausragende Abschnitt eine zusätzliche Befestigung anderer Funktionsteile bspw. von Isolatoren, wie weiter unten noch beschrieben.

Gemäß einer weiteren vorteilhaften Ausführungsform der Erfindung ist vorgesehen, dass der Leitungsabschnitt eine Oberfläche aufweist, auf welcher ein elektrischer Isolator angebracht ist, insbesondere auf einer von der elektrochemischen Speichereinrichtung weg weisenden Oberfläche. Ein solcher elektrischer Isolator vermag insbesondere einzelne elektrochemische Speichereinrichtungen bei Anordnung etwa in einem thermischen Modul elektrisch isolierend zueinander anzuordnen. Da insbesondere die Seitenteile elektrisch leitfähig ausgebildet sein können, kann etwa bei elektrischem Kontakt zweier elektrochemischer Speichereinrichtungen ein Kurzschluss erfolgen. Durch das Vorsehen von geeignet angebrachten Isolatoren, kann eine solche unerwünschte Kurzschlussschaltung vermieden werden.

Entsprechend einer weiteren besonders vorteilhaften Ausführungsform der Erfindung ist vorgesehen, dass der elektrisch leitende Wandungsabschnitt vom Seitenteil umfasst ist, welches als geformtes Blech ausgebildet ist. Insbesondere da bei auf Anodenpotential liegenden Seitenteilen diese auch zur Kontaktierung der Anoden elektrisch verschaltet werden, eignet sich das Seitenteil besonders.

Gemäß einer ersten besonders bevorzugten Ausführungsform des erfindungsgemäßen thermischen Moduls ist vorgesehen, dass der Leitungsabschnitt auch als Stütze ausgebildet ist, welche die elektrochemischen Speichereinrichtungen, gegen andere elektrochemische Speichereinrichtungen, gegen andere Stützen anderer elektrochemischer Speichereinrichtungen und/oder gegen eine Modulfläche abstützen. Um bei einer solchen Abstützung einen elektrischen Kurzschluss zu vermeiden, können zusätzlich noch Isolatoren vorgesehen sein. Diese können bspw. auf dem Leitungsabschnitt angeordnet sein, oder auch als separate und vereinzelte Bauteile vorliegen. Durch die Ausbildung des Leitungsabschnitts als Stütze kann folglich eine mechanisch stabile und gegenüber mechanischen Belastungen von außen feste Anordnung einzelner elektrochemischer Speichereinrichtungen erfolgen. Insbesondere bei Anwendung solcher thermischer Module in einem nicht statischen Umfeld, sondern etwa wie bei mobilen Anwendungen in einem bewegten Umfeld erweist sich eine solche feste Stützstruktur als besonders vorteilhaft.

Gemäß einer weiteren möglichen Ausführungsform eines solchen thermischen Moduls, kann vorgesehen sein, dass der wenigstens teilweise flächige Leitungsabschnitt eine geeignet geformte Aufnahme für einen Isolator aufweist. Hierbei kann der Leitungsabschnitt auch geeignet ausgeformte Haltemittel aufweisen. Eine Aufnahme kann auch so ausgebildet sein, dass der Isolator zwischen verschiedene Bereiche des Leitungsabschnitts eingefügt werden kann. Durch eine geeignet ausgeformte Aufnahme für den Isolator kann der Isolator mit dem flächigen Leitungsabschnitt sicher und bauformgerecht verbunden werden.

Nachfolgend soll die Erfindung anhand einzelner schematischer Darstellungen im Detail erklärt werden. Hierbei sei darauf hingewiesen, dass die Darstellungen in den Figuren lediglich schematischer Natur sind und keine Einschränkung hinsichtlich der Ausführbarkeit der Erfindung darstellen.

Weiterhin soll darauf hingewiesen werden, dass Bauteile, die mit gleichen Bezugszeichen versehen sind, eine gleiche technische Wirkung und Funktion erfüllen.

Weiterhin soll darauf hingewiesen werden, dass die in den Figuren dargestellten Einzelmerkmale für sich allein sowie in beliebiger Zusammensicht mit anderen Merkmalen beansprucht werden, soweit die damit erzielte Ausführungsform unter die vorliegende Erfindungsidee fällt.

Hierbei zeigen:
- Figur 1: eine schematische Darstellung einer Schnittansicht von der Seite durch eine erste Ausführungsform einer erfindungsgemäßen elektrochemischen Speichereinrichtung;
- Figur 2: eine vergrößerte Darstellung des Bereichs von Wandungsabschnitt und Leitungsabschnitt in seitlicher Schnittansicht wie er etwa von einer ausführungsgemäßen elektrochemischen Speichereinrichtung nach Figur 1 umfasst sein kann;
- Figur 3: eine vergrößerte Darstellung des Bereichs von Wandungsabschnitt und Leitungsabschnitt in seitlicher Schnittansicht wie er etwa von einer ausführungsgemäßen elektrochemischen Speichereinrichtung nach Figur 1 umfasst sein kann;
- Figur 4: eine vergrößerte Darstellung des Bereichs von Wandungsabschnitt und Leitungsabschnitt in seitlicher Schnittansicht wie er etwa von einer ausführungsgemäßen elektrochemischen Speichereinrichtung nach Figur 1 umfasst sein kann;
- Figur 5: eine vergrößerte Darstellung des Bereichs von Wandungsabschnitt und Leitungsabschnitt in seitlicher Schnittansicht wie er etwa von einer ausführungsgemäßen elektrochemischen Speichereinrichtung nach Figur 1 umfasst sein kann;
- Figur 6: eine erste Ausführungsform eines erfindungsgemäßen thermischen Moduls in seitlicher Schnittansicht.

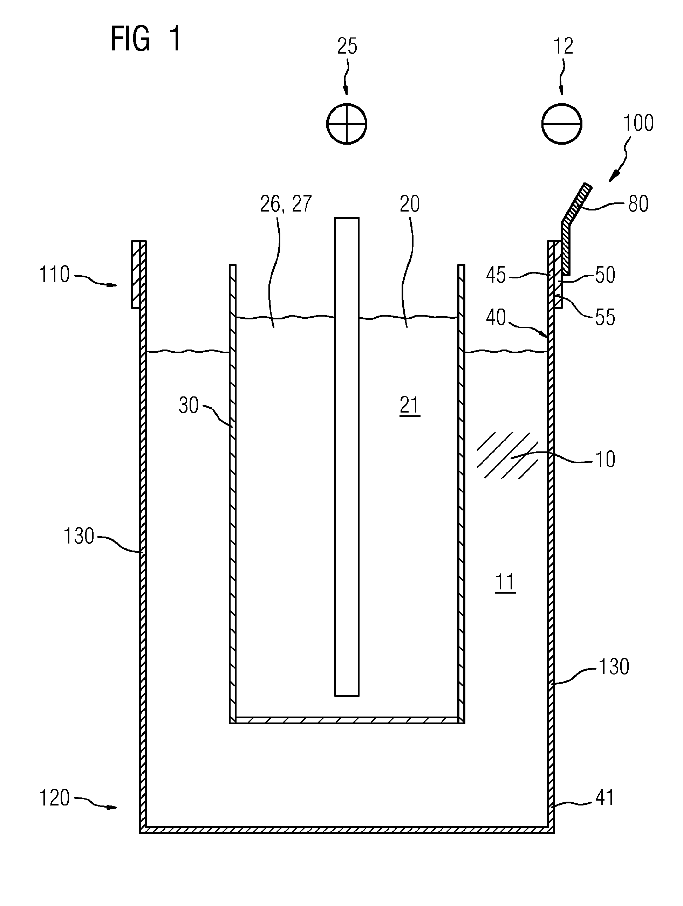

Figur 1 zeigt eine seitliche Schnittansicht durch eine erste Ausführungsform einer erfindungsgemäßen elektrochemischen Speichereinrichtung 100, welche einen Anodenraum 11 aufweist, der durch einen Festkörperelektrolyten 30 von einem Kathodenraum 21 getrennt ist. Der Anodenraum 11 ist während eines vorliegend dargestellten typischen Betriebszustandes mit Anodenmaterial 10 angefüllt. Ebenso ist der Kathodenraum 21 durch Kathodenmaterial 20 angefüllt. Der Festkörperelektrolyt 30 ist vorliegend becherförmig ausgebildet.

Entsprechend der Technik der Natrium-Nickel-Chlorid-Zellen ist das Anodenmaterial elementares Natrium, welches bei Betriebstemperatur der Speichereinrichtung 100 (etwa zwischen 200 °C und 350 °C) in flüssiger Form vorliegt.

Der Füllstandspegel des flüssigen Anteils von Kathodenmaterial 20 in dem Kathodenraum 21 ist je nach Ladungszustand der elektrochemischen Speichereinrichtung 100 mit dem Füllstandspegel des Anodenraums 11 korreliert. Das Kathodenmaterial 20 umfasst vorliegend insbesondere eine Kathode 25 sowie ein Kathodensalz 26 und einen Kathodenelektrolyten 27, welche vorliegend einheitlich dargestellt sind. Gemäß der Technologie einer Natrium-Nickel-Chlorid-Zelle ist die Kathode 25 bspw. als metallischer Nickelstab (Nickeldraht) ausgebildet, welches von metallischem Nickelpulver umgeben ist, und das Kathodensalz 26 als Natriumchlorid.

Die Kathode 25 erlaubt im Bereich des Kopfteils 110 der elektrochemischen Speichereinrichtung 100 eine elektrische Kontaktierung, um je nach Ladungs- bzw. Entladungszustand der Speichereinrichtung 100 elektrische Ladung zu- bzw. abzuführen. Die Anode der elektrochemischen Speichereinrichtung 100 wird auch durch das metallisch ausgeführte Seitenteil ausgebildet. Das Seitenteil 130 ist seinerseits Teil eines Bechers 41, welcher sowohl das Fußteil 120 als auch das Seitenteil 130 umfasst. Die Abdichtung der elektrochemischen Speichereinrichtung 100 im Bereich des Kopfteils 110 kann nach aus dem Stand der Technik bekannten Lehren erfolgen.

Der von der elektrochemischen Speichereinrichtung 100 umfasste Festkörperelektrolyt 30 erlaubt eine spezifische Ionenleitfähigkeit, ohne jedoch einen darüber hinaus gehenden Stoffaustausch zwischen Anodenraum 11 und Kathodenraum 21 zu ermöglichen. Gemäß der Technologie der Natrium-Nickel-Chlorid-Zelle ist der Festkörperelektrolyt 30 als β-Al₂O₃ bzw. β"- Al₂O₃ ausgebildet und ermöglicht bspw. eine selektive Na⁺-Ionenleitfähigkeit. Insofern ist es den Na⁺-Ionen bei Aufladung der elektrochemischen Speichereinrichtung 100 möglich, aus dem Kathodenraum in den Anodenraum zu wandern, wobei sie dort durch Bereitstellung von Elektronen zu elementarem Natrium reduziert werden. Dieses sammelt sich im Laufe des Ladevorgangs zunehmend im Anodenraum an.

Wird die elektrochemische Speichereinrichtung 100 entladen, erfolgt ein in entgegen gesetzter Richtung ablaufender Na⁺-Ionentransport, wobei Natrium an der Grenzfläche zwischen dem Festkörperelektrolyten und dem Anodenmaterial oxidiert wird, wonach das dadurch entstehende Na⁺-Ion durch den Festkörperelektrolyten in den Kathodenraum 21 wandert. Je nach Auflade- bzw. Entladezustand unterscheidet sich damit der Füllstandspegel an Anodenmaterial 10 im Anodenraum 11 und an Kathoden-Elektrolyt 27 im Kathodenraum 21.

Neben der elektrischen Kontaktierung über die Kathode 25 erlaubt die elektrochemische Speichereinrichtung 100 die elektrische Kontaktierung der Anode 12 über eine Kontaktiereinrichtung 80. Diese Kontaktiereinrichtung 80, welche vorliegend nicht mit beansprucht werden muss, kann bspw. als Leitungslasche ausgeführt sein. Die Kontaktiereinrichtung 80 ist mit dem Leitungsabschnitt 50 elektrisch verbunden, wobei der Leitungsabschnitt 50 selbst mit dem Wandungsabschnitt 45 der Wandung 40 elektrisch verbunden ist. Bei elektrischem Betrieb der elektrochemischen Speichereinrichtung 100 kann somit elektrische Ladung über den Wandungsabschnitt 45 an den Leitungsabschnitt 50 und daran im Anschluss an die Kontaktiereinrichtung 80 geleitet werden. Ausführungsgemäß weist der Leitungsabschnitt 50 einen geeigneten Flächenverlauf auf, so dass eine Fläche 55 dem Flächenverlauf des Wandungsabschnittes 45 angepasst ist. Folglich kann eine geeignete und durch die Geometrie unterstützte vorteilhafte elektrische Leitung von Ladungsträgern zwischen Leitungsabschnitt 50 und Wandungsabschnitt 45 erfolgen.

Um die ohmschen Verluste im Bereich der elektrischen Kontaktierung mit der Kontaktierungseinrichtung 80 zu vermindern, wird erfindungsgemäß die Kontaktierungseinrichtung 80 nicht direkt mit dem Wandungsabschnitt 45 der Wandung 40 elektrisch verbunden, sondern lediglich vermittelt durch den Leitungsabschnitt 50. Die Leitfähigkeit pro Fläche des Leitungsabschnitts 50 ist hierbei größer als die der Wandung 40 pro Fläche des Wandungsabschnitts 45. In anderen Worten ausgedrückt, ist die Flächenleitfähigkeit des Leitungsabschnitts 50 größer als die des Wandungsabschnitts 45. Dadurch werden auch bei Beaufschlagung mit verhältnismäßig hohen Stromdichten die ohmschen Verluste in diesem Bereich gering gehalten, so dass die thermische Verlustleistung bei Betrieb der elektrochemischen Speichereinrichtung 100 vorteilhaft ausfällt.

Nachfolgend soll der Bereich der Kontaktierung von Leitungsabschnitt 50 und Wandungsabschnitt 45 entsprechend unterschiedlicher möglicher Ausführungsformen im Detail vergrößert dargestellt werden.

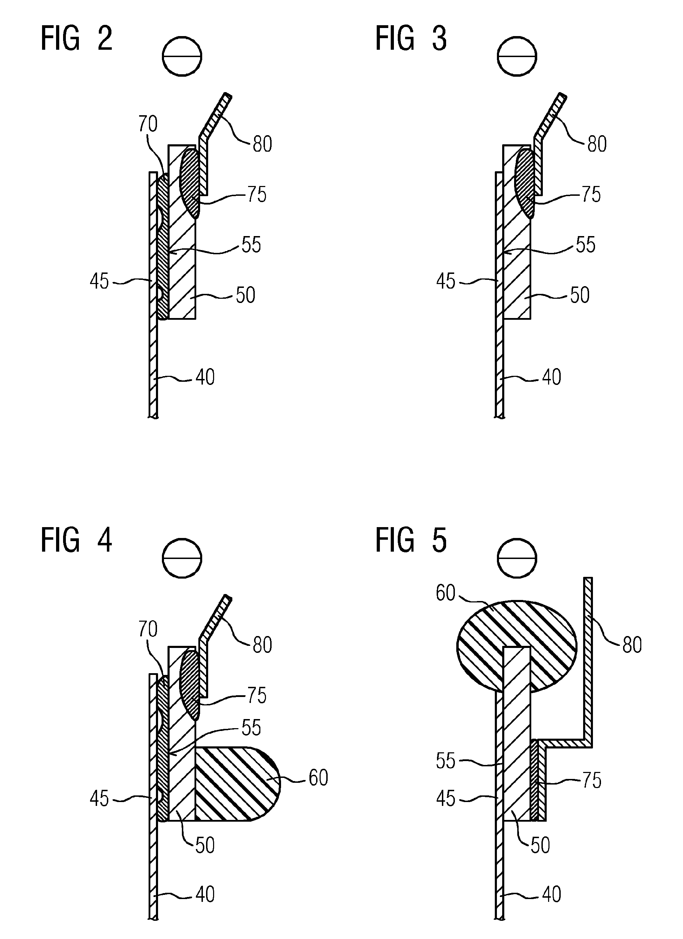

Figur 2 zeigt eine erste Ausführungsform eines solchen vergrößert dargestellten Bereichs der Wandung 40, an welcher über einen Wandungsabschnitt 45 der Leitungsabschnitt 50 über eine Fläche 55 miteinander in elektrische Verbindung gebracht ist. Vermittelt wird die elektrische Verbindung zwischen Wandungsabschnitt 45 und der Fläche 55 des Leitungsabschnitts 50 durch ein Flussmaterial 70, welches bspw. ein Schweißmaterial ist. Flussmaterial 70 kann Drittmaterial sein oder auch nicht. Insbesondere ist das Flussmaterial 70 verschweißtes Metall, welches den Leitungsabschnitt 50 mit dem Wandungsabschnitt 45 durch eine Schweißverbindung verbindet.

Die Querschnittsdarstellung zeigt, dass sowohl der Wandungsabschnitt 45 als auch der Leitungsabschnitt 50 im Wesentlichen flächig ausgeführt sind. Hierbei weist eine Ausdehnungsrichtung des Bauteils (in der Bildebene von oben nach unten) eine im Vergleich zu den anderen Ausdehnungsrichtungen senkrecht (in der Bildebene von links nach rechts) dazu deutlich größere Ausdehnung auf. Vorliegend ist also die gemäß der hier dargestellten Orientierung die Ausdehnung von oben nach unten deutlich größer als die Ausdehnung etwa von rechts nach links. Aufgrund der unterschiedlichen Dicken dieser flächigen Bauteile, also von Wandungsabschnitt 45 und von Leitungsabschnitt 50, ergibt sich für die jeweiligen Bauteile eine unterschiedliche Flächenleitfähigkeit. Es ist also verständlich, dass die ohmschen Verluste für ein verhältnismäßig dickeres Bauteil wie dem Leitungsabschnitt 50 geringer ausfallen als für das verhältnismäßig dünnere Bauteil, also für den Wandungsabschnitt 45.

Insbesondere bei Beaufschlagung der jeweiligen Bauteile mit Ladungen bei relativ hohen Stromdichten ermöglicht somit der Leitungsabschnitt 50 aufgrund seiner verhältnismäßig größeren Dicke geringere ohmsche Leitungsverluste. Da aber der Leitungsabschnitt 50 ein besseres Leitungsverhalten hat und darüber hinaus noch flächig mit dem Wandungsabschnitt 45 verbunden ist, so dass bei Beaufschlagung mit einer hohen Stromdichte die Ladungsträger flächig verteilt geeignet geleitet werden können, kann der thermische Verlust bei Betrieb der elektrochemischen Speichereinrichtung 100 vermindert werden. Dies wiederum erhöht die Gesamteffizienz bei Betrieb der elektrochemischen Speichereinrichtung 100.

Ausführungsgemäß ist die Kontaktiereinrichtung 80 mit dem Leitungsabschnitt 50 wiederum über ein Flussmaterial 75 verbunden, welches eine geeignete elektrische Kontaktierung ermöglicht. Das Flussmaterial 75 ist bevorzugt wiederum Schweißmaterial.

Figur 3 zeigt eine weitere Ausführungsform der möglichen Verbindung von Leitungsabschnitt 50 und Wandungsabschnitt 45 auf, wie es bspw. von der Ausführungsform der elektrochemischen Speichereinrichtung 100 nach Figur 1 umfasst sein kann. Hierbei unterscheidet sich die Ausführungsform nach Figur 3 von der in Figur 2 gezeigten Ausführungsform lediglich dahingehend, dass die Kontaktierung des Leitungsabschnitts 50 und Wandungsabschnitts 45 nicht durch ein Flussmaterial 70 vermittelt wird, sondern beide in unmittelbarem mechanischen Kontakt sind. Sind beide geeignet metallisch ausgeführt und ggf. mit einer leitfähigen Oberflächenschicht gegen Oxidation geschützt, reicht dieser unmittelbare Kontakt bereits zur elektrischen Kontakierung aus. Insbesondere erfolgt die Kontaktierung von Leitungsabschnitt 50 und Wandungsabschnitt 45 durch Steckkontakt bzw. Klemmkontakt.

Figur 4 zeigt eine weitere Ausführungsform des Bereichs der Verbindung von Leitungsabschnitt 50 und Wandungsabschnitt 45, welcher im Wesentlichen der Ausführungsform gemäß Figur 2 gleicht. Zusätzlich jedoch weist der Leitungsabschnitt 50 einen von der Wandung 40 weggerichteten Isolator 60 auf, welcher etwa dazu ausgebildet ist, bei Anordnung zweier elektrochemischer Speichereinrichtungen 100 nebeneinander in einem nicht weiter gezeigten thermischen Modul 200 beide auf ausreichendem Abstand zueinander zu halten, und voneinander elektrisch zu isolieren. Vorliegend ist der Isolator 60 in der gezeigten Querschnittsansicht mit einer Rundung versehen.

Alternativ zu der in Figur 4 gezeigten Ausführungsform kann wie in Figur 5 gezeigt, der Isolator 60 auch auf den Leitungsabschnitt 50 endständig aufgesetzt sein. Hierbei ragt der Leitungsabschnitt 50 über den Wandungsabschnitt 45, bzw. über das nicht weiter gezeigte Kopfteil 110 hinaus, so dass eine Lasche bzw. ein Kragen vorliegt. Auf diesem kann endständig ein geeignet geformter Isolator 60 angebracht werden. Zur Kontaktierung der Kontakteinrichtung 80 wird diese nun im Vergleich zu der in Figur 4 gezeigten Ausführungsform in einem anderen Bereich des Leitungsabschnitts 50 kontaktiert. Hierbei ist jedoch wichtig, dass die Kontakteinrichtung 80 die Isolierwirkung des Isolators 60 nicht in Frage stellt. Denkbar ist bspw. dass die Kontakteinrichtung 80 benachbarter elektrochemischer Speichereinrichtungen 100 an unterschiedlichen Orten an den Isolatoren 60 vorbei geführt werden, so dass kein elektrischer Kontakt resultiert. Ebenso ist es denkbar, dass die Kontakteinrichtung 80 innerhalb des Isolators 60 geführt wird.

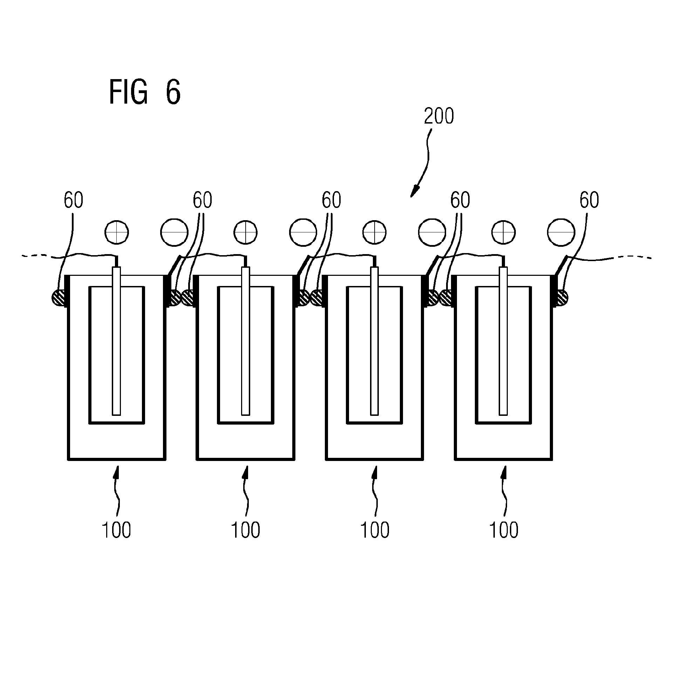

Figur 6 zeigt eine Ausführungsform des erfindungsgemäßen thermischen Moduls 200, welches eine Mehrzahl an miteinander elektrisch verschalteten elektrochemischen Speichereinrichtungen 100 aufweist. Die einzelnen elektrochemischen Speichereinrichtungen 100 gleichen hierbei im Wesentlichen der in Figur 1 gezeigten Ausführungsform. Zur geeigneten Zu- und Abführung elektrischer Ladung an der Anode 12 sind die Leitungsabschnitte 50 jeweils mit einer Kontakteinrichtung 80 elektrisch kontaktiert. Die Kontakteinrichtungen 80 sind wiederum gemeinsam elektrisch verschaltet. Zur Beabstandung und elektrischen Isolation einzelner zueinander benachbarter elektrochemischer Speichereinrichtungen 100 sind Isolatoren 60 vorgesehen, die im Bereich der Leitungsabschnitte 50 vorgesehen sind.

Weitere Ausführungsformen ergeben sich aus den Unteransprüchen.

## Patentansprüche

1. Elektrochemische Speichereinrichtung (100), welche einen bei Betrieb mit einem Anodenmaterial (10) befüllten Anodenraum (11) aufweist, sowie mit einem Kathodenmaterial (20) befüllten Kathodenraum (21), wobei der Anodenraum (11) von dem Kathodenraum (21) durch einen Ionen leitenden Festkörperelektrolyten (30) getrennt ist, und wobei der Anodenraum (11) zu einer Seite wenigstens teilweise durch den Festkörperelektrolyten (30) begrenzt ist, und zu einer anderen Seite wenigstens teilweise von einer den Festkörperelektrolyten (30) wenigstens teilweise umgebenden Wandung (40), welche von einem Kopfteil (110) der elektrochemischen Speichereinrichtung (100), einem dem Kopfteil (110) gegenüber angeordneten Fußteil (120) und/oder von einem zwischen Kopfteil (110) und Fußteil (120) angeordneten Seitenteil (130) umfasst ist, und wobei die Wandung (40) einen elektrisch leitenden Wandungsabschnitt (45) aufweist, der als Anode (12) dem Anodenraum (11) zugeordnet ist,
**dadurch gekennzeichnet, dass** ein wenigstens teilweise flächiger, elektrisch leitender Leitungsabschnitt (50) umfasst ist, der mit dem Wandungsabschnitt (45) über eine Fläche (55) elektrisch verbunden ist, und wobei die elektrische Leitfähigkeit pro Fläche (55) des Leitungsabschnitts (50) größer ist als die der Wandung (40) pro Fläche des Wandungsabschnitts (45).

2. Elektrochemische Speichereinrichtung gemäß Anspruch 1,
**dadurch gekennzeichnet, dass** die Fläche (55) des Leitungsabschnitts (50) dem Flächenverlauf des Wandungsabschnitts (45) angepasst ist.

3. Elektrochemische Speichereinrichtung gemäß einem der vorhergehenden Ansprüche,
**dadurch gekennzeichnet, dass** der Wandungsabschnitt (45) eine Wandungsdicke aufweist, die geringer ist, als die Dicke des wenigstens teilweise flächigen Leitungsabschnitts (50) im Bereich der Fläche (55).

4. Elektrochemische Speichereinrichtung gemäß einem der vorhergehenden Ansprüche,
**dadurch gekennzeichnet, dass** der Wandungsabschnitt (45) sowie der wenigstens teilweise flächige Leitungsabschnitt (50) metallisch sind, wobei beide über eine feste metallische Verbindung, insbesondere eine Schweißverbindung, miteinander mechanisch belastbar verbunden sind.

5. Elektrochemische Speichereinrichtung gemäß einem der vorhergehenden Ansprüche,
**dadurch gekennzeichnet, dass** der Wandungsabschnitt (45) näher im Bezug zum Kopfteil (110) angeordnet ist, als zum Fußteil (120).

6. Elektrochemische Speichereinrichtung gemäß einem der vorhergehenden Ansprüche,
**dadurch gekennzeichnet, dass** der Wandungsabschnitt (45) am Seitenteil (130) angeordnet ist.

7. Elektrochemische Speichereinrichtung gemäß einem der vorhergehenden Ansprüche,
**dadurch gekennzeichnet, dass** der wenigstens teilweise flächige Leitungsabschnitt (50) das Kopfteil (110) teilweise oder vollständig umgibt, insbesondere um das Kopfteil (110) herum als Leitungsmanschette angeordnet ist.

8. Elektrochemische Speichereinrichtung gemäß einem der vorhergehenden Ansprüche,
**dadurch gekennzeichnet, dass** der wenigstens teilweise flächige Leitungsabschnitt (50) über das Kopfteil (110) heraus ragt.

9. Elektrochemische Speichereinrichtung gemäß einem der vorhergehenden Ansprüche,
**dadurch gekennzeichnet , dass** der Leitungsabschnitt (50) eine Oberfläche aufweist, auf welcher ein elektrischer Isolator (60) angebracht ist, insbesondere auf einer von der elektrochemischen Speichereinrichtung (100) wegweisenden Oberfläche.

10. Elektrochemische Speichereinrichtung gemäß einem der vorhergehenden Ansprüche,
**dadurch gekennzeichnet, dass** der elektrisch leitende Wandungsabschnitt (45) vom Seitenteil (130) umfasst ist, welches als geformtes Blech ausgebildet ist.

11. Thermisches Modul (200) zur Speicherung und Abgabe von elektrischer Energie, umfassend eine Mehrzahl an elektrisch verschalteten elektrochemischen Speichereinrichtungen (100) gemäß einem der vorher gehenden Ansprüche, wobei der wenigstens teilweise flächige Leitungsabschnitt (50) elektrisch zur Zu- und Abführung von elektrischer Ladung an die Anode (12) mit geeigneten elektrischen Leitungen kontaktiert ist.

12. Thermisches Modul (200) gemäß Anspruch 11, **dadurch gekennzeichnet, dass** der Leitungsabschnitt (50) auch als Stütze ausgebildet ist, welche die elektrochemischen Speichereinrichtungen (100) gegen andere elektrochemische Speichereinrichtungen (100), gegen andere Stützen anderer elektrochemischer Speichereinrichtungen (100) und/oder gegen eine Modulfläche abstützt.

13. Thermisches Modul (200) gemäß einem der Ansprüche 11 oder 12,
**dadurch gekennzeichnet, dass** der wenigstens teilweise flächige Leitungsabschnitt (50) eine geeignet geformte Aufnahme für einen Isolator (60) aufweist.
